# EUROPÄISCHE PATENTANMELDUNG

(11) **EP 1 293 600 A2**
(43) Veröffentlichungstag der Anmeldung: **19.03.2003**
(21) Anmeldenummer: 02014296.4
(22) Anmeldetag: 27.06.2002
(51) Int. Cl.: D07B 1/06, D07B 1/16

(54) **Verstärkungskord**

(30) Priorität: 12.09.2001 DE 10144833
(71) Anmelder: Continental Aktiengesellschaft, 30165 Hannover (DE)
(72) Erfinder: Besson, Marc-André, 30823 Garbsen (DE); Burfien, Jörg, DE-30823 Garbses (DE); Gerke, Hans Werner, 31535 Neustadt (DE); Härtwig, Andreas, 30823 Garbsen (DE); Holste, Werner, 30539 Hannover (DE); Jeromien, Dieter, 30419 Hannover (DE); Kaldune, Norman, 28277 Charlotte (US); Rösner, Michael, 30926 Seelze (DE); Rötter, Wolfgang, 30459 Hannover (DE); Seevers, Jörn, 31303 Burgdorf (DE); Speckhals, Ulrich, 30177 Hannover (DE); Weber, Frank, DE-31535 Neustadt (DE)

(57) **Zusammenfassung**

Die Erfindung betrifft einen Verstärkungskord für eine Gürtellage oder eine Karkassenlage eines Fahrzeugluftreifens, bestehend aus einem Seelenfilament und vier bis sechs Stahl- Lagenfilamenten. Das Seelenfilament besteht (1, 1') aus einem elastisch oder plastisch verformbaren polymeren Werkstoff oder ist mit einem solchen umhüllt, füllt den von den Lagenfilamenten (2, 2') umschlossenen Raum auf und/oder ist in die Zwischenräume zwischen den Lagenfilamenten (2, 2') eingedrungen.

## Beschreibung

Die Erfindung betrifft einen Verstärkungskord für eine Gürtellage oder eine Karkassenlage eines Fahrzeugluftreifens bestehend aus einem Seelenfilament und vier bis sechs Stahl- Lagenfilamenten.

Verstärkungskorde für die Gürtel- und/oder Karkassenlage(n) eines Fahrzeugluftreifens sind in verschiedenen Konstruktionen bekannt. Zu diesen bekannten Konstruktionen zählen solche, bei denen um ein Seelenfilament aus Stahl vier bis sechs weitere Stahlfilamente verseilt sind. Diese Stahlkordkonstruktionen werden als 1+4, 1+5 und als 1+6 bezeichnet. Der Durchmesser der Stahlfilamente beträgt meist zwischen 0,15 bis 0,38 Millimeter. In der EP- A2- 0 987 128 werden Verstärkungskorde obiger Konstruktionen als Festigkeitsträger für die Karkassenlagen eines Fahrzeugluftreifens vorgeschlagen, wobei die Stahlfilamente einen sehr kleinen Durchmesser in der Größenordnung von 0,12 Millimeter oder weniger aufweisen sollen.

Stahlkorde dieser Konstruktionen sind, im Fall von Schnittverletzungen oder dergleichen der Gürtel- oder Karkassenlagen, wie sie beim Fahrbetrieb der Reifen durch scharfe Gegenstände, wie Nägel, Steine etc. auftreten können, relativ anfällig für Korrosion. Die zwischen den Lagenfilamenten und dem Seelenfilament vorhandenen und von ihrem Durchmesser her sehr kleinen Hohlräume entfalten nämlich eine Kapillarwirkung beim Eindringen von Feuchtigkeit bzw. Wasser. Es ist bekannt, dass korrodierende Stahlkorde die Haltbarkeit von Reifen reduzieren.

Der Erfindung liegt die Aufgabe zu Grunde, einen Verstärkungskord der eingangs genannten Art mit einer deutlich geringeren Korrosionsanfälligkeit zur Verfügung zu stellen.

Gelöst wird die gestellte Aufgabe erfindungsgemäß dadurch, dass das Seelenfilament aus einem elastisch oder plastisch verformbaren polymeren Werkstoff besteht oder mit einem solchen umhüllt ist, den von den Lagenfilamenten umschlossenen Raum auffüllt und/oder in die Zwischenräume zwischen den Lagenfilamenten eingedrungen ist.

Die Lagenfilamente sind daher mit einem Seelenfilament in Kontakt, welches nicht nur auf Grund seiner Ausführung korrosionsbeständig ist, sondern im Kord derart verformt ist, dass dieser keine oder kaum noch Hohlräume aufweist, die eine Kapillarwirkung entfalten können.

Eine Anzahl elastisch oder plastisch verformbarerer polymerer Werkstoffe ist dafür besonders gut geeignet, für das Seelenfilament bzw. dessen Umhüllung verwendet zu werden. Zu diesen Werkstoffen gehören Gummi, also eine vulkanisierte Kautschukmischung, Polyester oder, für die Umhüllung des Seelenfilaments, eine unvulkanisierte Kautschuk- bzw. Polymermischung.

Bei einer bevorzugten Ausführungsform kann ferner vorgesehen werden, dass das Seelenfilament selbst noch eine Stahlseele aufweist, die entsprechend umhüllt ist.

Um das gewünschte Auffüllen der Zwischenräume bzw. des von den Lagenfilamenten umschlossenen Raumes sicher zu stellen, ist es von Vorteil, wenn der Durchmesser bzw. die Querschnittsfläche des Seelenfilaments größer gewählt wird als der Durchmesser bzw. die Querschnittsfläche der Lagenfilamente. Dabei wird der Durchmesser der Lagenfilamente in der Größenordnung zwischen 0,1 und 0,4 mm gewählt.

Die Erfindung betrifft auch einen Fahrzeugluftreifen, welcher zumindest eine Gürteloder Karkassenlage aufweist, deren Verstärkungskorde gemäß der Erfindung ausgeführt sind.

Die Erfindung betrifft darüber hinaus auch ein Verfahren zur Herstellung eines Verstärkungskordes für eine Gürtel- oder eine Karkassenlage eines Fahrzeugreifens, wobei der Verstärkungskord aus 4 bis 6 Lagenfilamenten aus Stahl, die um ein Seelenfilament verseilt werden, besteht. Nach dem erfindungsgemäßen Verfahren wird ein aus einem elastisch verformbaren Material, insbesondere aus Gummi, bestehendes Seelenfilament im elastischen Bereich gedehnt und mit den Lagenfilamenten verseilt, wobei anschließend der Dehnvorgang beendet wird. Dadurch stellt sich der Gummi unter Auffüllen des von den Lagenfilamenten umschlossenen Raumes bzw. unter Eindringen in die Zwischenräume zwischen den Lagenfilamenten zurück.

Es ist daher von Vorteil, wenn gemäß dieses Verfahrens ein Seelenfilament verwendet wird, dessen Durchmesser bzw. Querschnittsfläche größer ist als der Durchmesser bzw. die Querschnittsfläche der Lagenfilamente.

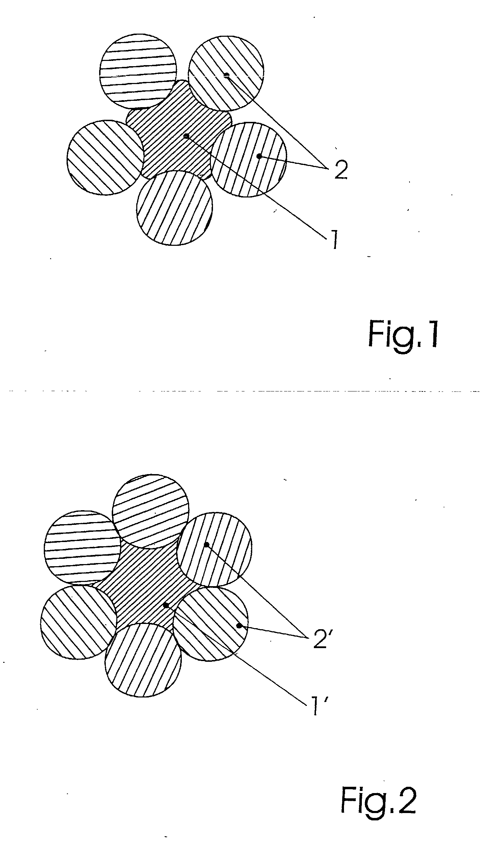

Die Erfindung wird nun anhand der Zeichnung, die zwei Ausführungsbeispiele darstellt, näher beschrieben. Dabei zeigen Fig. 1 und Fig. 2 Querschnitte durch erfindungsgemäß ausgeführte Verstärkungskorde.

Der in Fig. 1 dargestellte Verstärkungskord ist ein Kord der Konstruktion 1+5 und besteht aus einem Seelenfilament 1 und fünf Lagenfilamenten 2. Die fünf Lagenfilamente 2 sind Stahlfilamente, die parallel zueinander liegend um das Innenfilament 1 verseilt sind. Die zugehörige und für einen bestimmten Verstärkungskord konstant gehaltene Schlaglänge wird vorzugsweise zwischen 3 und 15 Millimeter gewählt. Das Seelenfilament 1 ist ein aus einem polymeren Werkstoff bestehendes Filament, welches in die zwischen den Lagenfilamenten 2 bestehenden schmalen Zwischenräume eingedrungen ist. Das Seelenfilament 1 besteht daher aus einem Material bzw. einer Materialzusammensetzung, das bzw. die derart elastisch oder plastisch verformbar ist, dass sich das mit einem insbesondere kreisförmigen Ausgangsquerschnitt versehene Filament bei der Herstellung des Verstärkungskordes verformt und in die Zwischenräume zwischen den Lagenfilamenten 2 eindringt.

Fig. 2 zeigt eine erfindungsgemäße Konstruktion mit sechs Lagenfilamenten 2', die miteinander in Berührung sind, wobei das Seelenfilament 1' den von den Lagenfilamenten 2' umschlossenen Raum auffüllt.

Das Seelenfilament 1, 1' kann aus Gummi, demnach einer vulkanisierten Kautschukmischung, bestehen und weist einen Durchmesser auf, der etwas größer ist, als der Durchmesser der Lagenfilamente 2, 2'. Zur Herstellung des Verstärkungskordes mit einem aus Gummi bestehenden Seelenfilament 1, 1' kann dieses vorerst durch Dehnen elastisch gestreckt werden, wobei nach dem Verseilen mit den Lagenfilamenten 2, 2' der Dehnvorgang abgebrochen wird und durch die Rückstellung des Gummis der Hohlraum zwischen den Lagenfilamenten 2' aufgefüllt wird bzw. Gummi in die Zwischenräume zwischen den Lagenfilamenten 2 eindringt.

Als Material für das Seelenfilament 1, 1' kommt auch Polyester in Frage, wobei auch in diesem Fall das Filament 1, 1' mit einem entsprechenden Durchmesser gewählt wird, sodass während des Verseilens mit der Lagenfilamente 2, 2' die erwünschte Verformung eintritt.

Das Seelenfilament 1, 1' kann ferner ein mit einem polymeren Werkstoff umhülltes Stahlfilament sein. Die Umhüllung des Stahlfilamentes kann aus einer vulkanisierten oder einer nicht vulkanisierten Polymer- bzw. Kautschukmischung bestehen.

Ein erfindungsgemäß ausgeführter Verstärkungskord besteht aus vier bis sechs, insbesondere übereinstimmend Stahlfilamenten bzw. Lagenfilamenten 2, 2', deren Durchmesser zwischen 0,05 und 0,5 Millimeter beträgt. Der Durchmesser bzw. die Querschnittsfläche des Seelenfilaments 1, 1' wird entsprechend dem Durchmesser der Lagenfilamente 2, 2' bzw. der Querschnittsfläche der aufzufüllenden Bereiche gewählt. Werden erfindungsgemäß ausgeführte Verstärkungskorde als Festigkeitsträger in einer Gürtellage eines Fahrzeugluftreifens verwendet, so werden Stahlfilamente mit einem Durchmesser von vorzugsweise 0,2 bis 0,35 Millimeter eingesetzt. Erfindungsgemäß ausgeführte Verstärkungskorde können auch zur Verstärkung von Karkassenlagen eingesetzt werden, wobei in diesem Fall Stahlfilamente mit einem Durchmesser von insbesondere 0,1 bis 0,15 Millimeter verwendet werden. Die Stahlfilamente können aus Stahl beliebiger Festigkeitsklassen, insbesondere den Festigkeitsklassen NT (normal tensile) HT (high tensile) SHT (super high tensile) oder UHT (ultra high tensile) bestehen. Stahlfilamente der Festigkeitsklasse NT weisen eine Zugfestigkeit von 2750 bis 3050 MPa, Stahlfilamente der Festigkeitsklasse HT weisen eine Zugfestigkeit zwischen 3050 und 3330 MPa, Stahlfilamente der Festigkeitsklasse SHT eine Zugfestigkeit zwischen 3350 und 3650 MPa und Stahlfilamente der Festigkeitsklasse UHT weisen eine Zugfestigkeit 3 3650 MPa auf.

## Patentansprüche

1. Verstärkungskord für eine Gürtellage oder eine Karkassenlage eines Fahrzeugluftreifens, bestehend aus einem Seelenfilament und vier bis sechs Stahl- Lagenfilamenten,
**dadurch gekennzeichnet,**
**dass** das Seelenfilament (1, 1') aus einem elastisch oder plastisch verformbaren polymeren Werkstoff besteht oder mit einem solchen umhüllt ist, den von den Lagenfilamenten (2, 2') umschlossenen Raum auffüllt und/oder in die Zwischenräume zwischen den Lagenfilamenten (2, 2') eingedrungen ist.

2. Verstärkungskord nach Anspruch 1 **dadurch gekennzeichnet, dass** das Seelenfilament (1, 1') oder seine Umhüllung aus Gummi besteht.

3. Verstärkungskord nach Anspruch 1 **dadurch gekennzeichnet, dass** das Seelenfilament (1, 1') aus Polyester besteht.

4. Verstärkungskord nach Anspruch 1 **dadurch gekennzeichnet, dass** die Umhüllung des Seelenfilaments (1, 1') aus einer unvulkanisierten Kautschuk- bzw. Polymermischung besteht.

5. Verstärkungskord nach einem der Ansprüche 1, 2 oder 4, **dadurch gekennzeichnet, dass** das umhüllte Seelenfilament (1, 1') eine Stahlseele aufweist.

6. Verstärkungskord nach einem der Ansprüche 1 bis 5 **dadurch gekennzeichnet, dass** der Durchmesser bzw. die Querschnittsfläche des Seelenfilaments (1, 1') größer ist als der Durchmesser bzw. die Querschnittsfläche der Lagenfilamente (2, 2').

7. Verstärkungskord nach einem der Ansprüche 1 bis 6 **dadurch gekennzeichnet, dass** der Durchmesser der Lagenfilamente (2, 2') zwischen 0,1 und 0,4 mm beträgt.

8. Fahrzeugluftreifen mit zumindest einer Verstärkungskorde aufweisenden Gürteloder Karkassenlage, **dadurch gekennzeichnet, dass** die Verstärkungskorde gemäß zumindest einem der vorhergehenden Ansprüche ausgeführt sind.

9. Verfahren zur Herstellung eines Verstärkungskordes für eine Gürtel- oder eine Karkassenlage eines Fahrzeugreifens, aus vier bis sechs Lagenfilamenten aus Stahl, die um ein Seelenfilament verseilt werden, **dadurch gekennzeichnet, dass** ein aus einem elastisch verformbaren Material, insbesondere aus Gummi, bestehendes Seelenfilament (1, 1') im elastischen Bereich gedehnt wird, mit den Lagenfilamenten (2, 2') verseilt wird und anschließend der Dehnvorgang beendet wird.

10. Verfahren nach Anspruch 9, **dadurch gekennzeichnet, dass** ein Seelenfilament (1, 1') mit einem größeren Durchmesser bzw. einer größeren Querschnittsfläche als der Durchmesser bzw. die Querschnittsfläche der Lagenfilamente (2, 2') verwendet wird.
